# EUROPÄISCHE PATENTSCHRIFT

(11) **EP 0 932 534 B1**
(45) Veröffentlichungstag und Bekanntmachung des Hinweises auf die Patenterteilung: **28.05.2003**
(21) Anmeldenummer: 98949918.1
(22) Anmeldetag: 19.08.1998
(51) Int. Cl.: B60S 1/24, F16C 11/04

(54) **GELENKVERBINDUNG**
JOINT
ARTICULATION

(30) Priorität: 26.08.1997 DE 19737070
(43) Veröffentlichungstag der Anmeldung: 04.08.1999
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: DE9802417
(87) Internationale Veröffentlichungsnummer: WO99010210

(56) Entgegenhaltungen:
- DE-A- 4 309 022
- DE-A- 19 519 867
- DE-A- 19 528 475
- DE-A- 19 639 593
- DE-U- 9 306 529
- FR-A- 2 550 287
- US-A- 5 553 962

## Beschreibung

### Stand der Technik

Die Erfindung geht aus von einer Gelenkverbindung nach dem Oberbegriff des Anspruchs 1.

Gelenkverbindungen werden in Hebelgetrieben vielfältig verwendet unter anderem bei Wischerantrieben, insbesondere bei sogenannten Viergelenk-Wischerantriebsanlagen. In einer älteren Patentanmeldung DE-A 196 39 593 ist beschrieben, einen ersten Hebel, z.B. ein Befestigungsteil, als Blechbiegeteil auszubilden, der am gelenkseitigen Ende eine Mulde aufweist, deren Rand an den freien Seiten nach außen schürzenförmig in Richtung des Muldenbodens umgebogen ist und über diesen hinausragt. In der Mitte der Mulde ist unter Verwendung einer äußeren Vorlegescheibe ein Lagerbolzen angenietet, wobei ein Nietteil am Lagerbolzen angeformt und der Nietkopf von einer Schutzkappe abgedeckt ist, die an der Vorlegescheibe befestigt ist. Der Lagerbolzen ist von einem Lagerauge eines zweiten Hebels, z.B. einem Koppelhebel umgeben, in das ein Lagerteil aus Kunststoff eingespritzt ist. Der zweite Hebel wird zwischen einer Lagerscheibe in der Mulde des ersten Hebels und einem Bund des Lagerzapfens axial gehalten. Die Lagerstelle zwischen dem Lagerbolzen und dem Lagerteil ist nach außen abgedichtet. Der zweite Hebel trägt im Bereich des Lagerauges eine äußere Abdeckung.

Die Wischerantriebe, die im Bereich zwischen einer Fahrzeugscheibe und einem Karosserieteil, insbesondere einer Motorhaube, angeordnet sind, bestimmen mit ihren Gelenkverbindungen weitgehend den Abstand zwischen dem Karosserieteil und der Fahrzeugscheibe, der aus optischen und akustischen Gründen sowie aus Strömungsgründen möglichst schmal gehalten werden soll.

### Vorteile der Erfindung

Nach der Erfindung hat der Lagerbolzen einen Hohlraum, der mindestens zu einer Stirnseite hin offen ist. Dadurch wird zum einen Material und Gewicht eingespart und zum anderen eröffnen sich zahlreiche Möglichkeiten, die Gelenkverbindung einfacher und insbesondere flacher zu gestalten, indem der Hohlraum für die Verbindung zwischen dem Lagerbolzen und dem ersten Hebel genutzt wird.

Nach einer Ausgestaltung der Erfindung weist die Mulde zentral einen tiefgezogenen Hohlkörper auf, der in den Hohlraum des Lagerbolzens hineinragt und an seiner Stirnseite mit dem Lagerbolzen vernietet ist. Der an den ersten Hebel angeformte Hohlkörper kann zum einen nach Art einer Hohlniete zur Befestigung des Lagerzapfens dienen, zum anderen kann er aber auch selbst den Lagerzapfen bilden. In beiden Fällen ist die Gelenkverbindung bei gleicher Länge der Lagerfläche flacher, weil im ersten Fall die Verbindungsstelle zwischen dem ersten Hebel und dem Lagerbolzen innerhalb des Gelenks liegt und somit keinen axialen Bauraum beansprucht und im zweiten Fall eine Verbindungsstelle entfällt. Auf eine äußere Vorlegescheibe und eine Schutzkappe kann verzichtet werden. Somit werden die Fertigung und die Montage erleichtert, sowie das Gewicht und der Materialeinsatz verringert. Ferner liegt die Verbindungsstelle in bezug auf Biegemomente in einem mechanisch geringer belasteten Bereich.

Da nunmehr der Muldenboden die untere Begrenzung des ersten Hebels bildet, kann auch der schürzenförmige Teil des Muldenrandes entfallen, der bisher die Vorlegescheibe und die Schutzkappe optisch abdeckte. Der Muldenrand läuft zweckmäßigerweise in einem Viertelkreisbogen quer zu einer Schwenkachse aus und schließt radial mit einer Gelenkabdeckung am zweiten Hebel ab. Somit bestimmt der Durchmesser des Lagerauges mit seiner Abdeckung die größte Breite des Hebels, die gegenüber üblichen Gelenkverbindungen reduziert ist.

Der Hohlkörper kann offen oder geschlossen sein. In der geschlossenen Form entfällt eine Dichtung zum Gelenkraum hin. Der Hohlkörper kann nur ein Stück in den Hohlraum des Lagerbolzens hineinragen und mit seinem vernieteten Kopf an einer entsprechenden Verengung des Hohlraums anliegen. Bei einer anderen Ausführung ist der Hohlkörper durch den Hohlraum hindurchgeführt und an seinem freien Ende über eine Lagerscheibe mit einem bundlosen Lagerzapfen vernietet. Der Lagerzapfen besteht in diesem Fall aus einer zylindrischen Distanzhülse, die zwischen den zwei Lagerscheiben gehalten wird. Der Hohlkörper ist mit der äußeren Lagerscheibe verbunden, indem sein äußerer Rand umgebördelt ist und die Lagerscheibe an die Stirnfläche der Distanzhülse preßt oder sein Boden mit der Lagerscheibe durch eine separate Niete verbunden ist. Nach einer weiteren Ausgestaltung der Erfindung bildet der Hohlkörper stirnseitig einen Bund zur Anlage der Lagerscheibe, gegen den die Lagerscheibe mit dem äußeren Teil des Hohlkörpers vernietet ist.

Die Höhe der Gelenkverbindung kann weiter reduziert werden, indem eine hochwertige Lagerbuchse verwendet wird, z.B. aus kunststoffbeschichtetem Stahl, die mit dem Lagerbolzen oder dem Lagerteil verbunden ist. Durch die größere Belastbarkeit wird sowohl die Länge der Lagerfläche und die Reibung verringert als auch das Verschleißverhalten verbessert.

Wenn der Hohlkörper selbst als Lagerzapfen dient, ist es zweckmäßig, daß auf seinen äußeren Umfang ein Lagerwerkstoff aufgespritzt ist. Die Schicht des Lagerwerkstoffs reicht dabei bis in den Muldengrund. Bei dieser Ausgestaltung trägt der Hohlkörper die zweite Lagerscheibe an einem Bund, gegen den sie mit dem Rand des Hohlkörpers vernietet ist.

Die Gelenkverbindung kann kostengünstiger gestaltet werden, wenn auch der zweite Hebel von einem Blechbiegeteil gebildet wird, das im wesentlichen einen U-förmigen Querschnitt hat und im Bereich der Gelenkverbindung nach innen weisende Ausstülpungen hat, auf die das Lagerteil beidseitig aufgespritzt ist. Durch das beidseitige Aufspritzen erreicht man, daß sich die Ausstülpungen beim Spritzvorgang nicht verformen und die Lagerflächen innerhalb der gewünschten Toleranzen herstellbar sind. Um den Spritzvorgang zu begünstigten, ist es ferner zweckmäßig, den Zwischenraum zwischen der Ausstülpung und dem U-förmigen Profil mehr oder weniger anzufüllen.

Das u-förmige Profil wird mit einer Kunststoffabdeckung verkleidet. Schließt die Abdeckung die offene Seite des U-förmigen Profils, entsteht ein allseitig geschlossener Hebel. Die Vorteile des zweiten Hebels als Blechbiegeteil sind so groß, daß es lohnend scheint, ihn nicht nur in Kombination mit einer Gelenkverbindung nach der Erfindung zu nutzen, sondern auch mit einer Gelenkverbindung nach dem Oberbegriff von Anspruch 1.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Schnitt durch eine Gelenkverbindung nach dem Stand der Technik,
- Fig. 2: einen Schnitt durch eine erfindungsgemäße Gelenkverbindung,
- Fig. 3: eine Variante zu Fig. 2 mit einer Lagerbüchse
- Fig. 4: eine perspektivische Ansicht eines ersten Hebels gemäß einer erfindungsgemäßen Gelenkverbindung,
- Fig. 5: eine perspektivische Ansicht eines zweiten Hebels als Blechbiegeteil,
- Fig. 6-9: Varianten zu Fig. 2,

- Fig. 10: einen Schnitt durch eine Gelenkverbindung nach Fig. 1 mit einem zweiten Hebel als Blechbiegeteil und
- Fig. 11: einen Schnitt durch eine Gelenkverbindung nach Fig. 2 mit einem zweiten Hebel als Blechbiegeteil.

### Beschreibung der Ausführungsbeispiele

Die Gelenkverbindungen nach der DE-A 196 39 593 haben einen ersten Hebel 10, der als Blechbiegeteil gestaltet ist und an seinem gelenkseitigen Ende eine Mulde 24 angeformt hat. In der Mitte der Mulde 24 ist ein Lagerbolzen 14 angeordnet, der mit einem Nietteil 76 durch eine Lagerscheibe 80, den Boden der Mulde 24 und eine Vorlegescheibe 72 gesteckt und vernietet ist. Eine Schutzkappe 74, die an der Vorlegescheibe 72 befestigt ist, deckt den Nietkopf 78 ab. Der Rand der Mulde 24 ist nach außen umgebogen und reicht schürzenförmig über den Bereich der Schutzkappe 74.

Ein zweiter Hebel 12 umfaßt den Lagerbolzen 14 mit einem Lagerauge 15, in das ein Lagerteil 16 üblicherweise aus Kunststoff eingespritzt ist. Er wird in der Regel als Druckgußteil hergestellt. Das Lagerteil 16 läuft auf dem Lagerbolzen 14 und stützt sich axial an der Lagerscheibe 80 und an einem Bund 82 des Lagerbolzens 14 ab. Die so gebildete Lagerstelle wird einerseits durch eine Dichtkappe 48 und andererseits durch eine Axialdichtung in Form einer Lippendichtung 40 oder eines Profilrings 42, 44 zwischen der Lagerscheibe 80, 36 und dem Lagerteil 16 geschützt. Eine am zweiten Hebel 12 befestigte Gelenkabdeckung 34 verkleidet den Gelenkbereich.

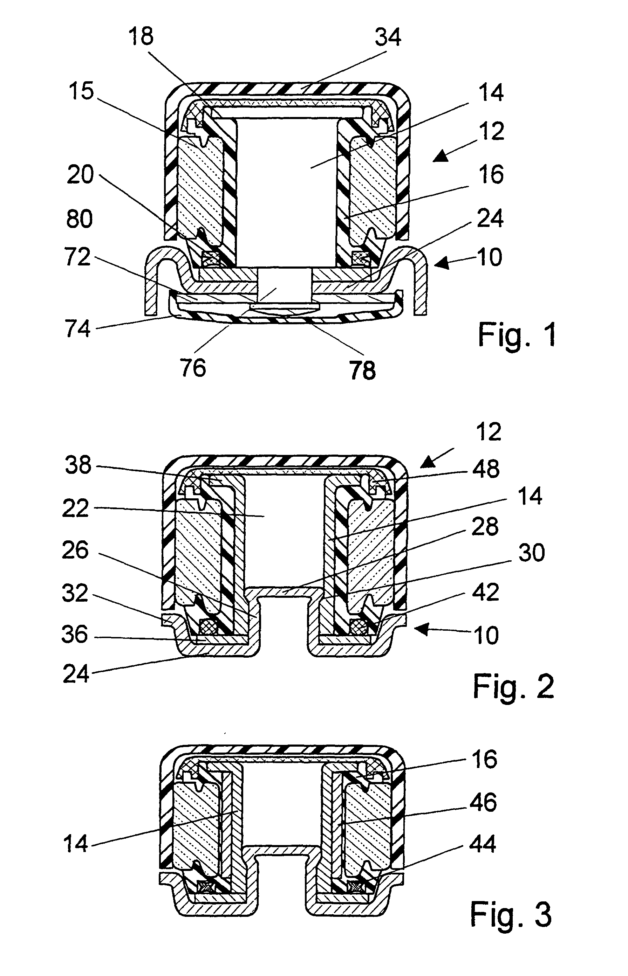

Bei den erfindungsgemäßen Ausführungen nach den Figuren 2 und 3 sowie 6 bis 9 und 11 hat der Lagerbolzen 14 einen Hohlraum 22, wodurch die Verbindung zwischen dem ersten Hebel 10 und dem Lagerbolzen 14 in den Lagerbereich gelegt werden kann und somit keinen axialen Bauraum beansprucht. Hierzu bildet der Hohlraum 22 gemäß der Ausführung nach Fig. 2 zur Mulde 24 hin eine Verengung, so daß das gestauchte Ende des Hohlkörpers 26 im Bereich seiner Stirnseite 28 an einer Anlagefläche 30 anliegt. Der tiefgezogene Hohlkörper 26 ist an seiner Stirnseite 28 geschlossen und schließt an der Verbindungsstelle die Lagerstelle dicht ab. Dadurch können die Schutzkappe 74 und die Vorlegescheibe 72 entfallen, wodurch Bauteile eingespart werden und die axiale Baulänge gekürzt wird. Ferner ist eine Dichtkappe 48 und ein Profilring 42 in Form eines Rundgummirings vorgesehen, die den Lagerbereich an den Stirnseiten des Lagerteils 16 abdichten.

Da die Mulde 24 nach unten geschlossen ist und der Boden der Mulde 24 die untere Begrenzung des ersten Hebels 10 darstellt, kann ihr schürzenförmiger Rand entfallen und der Rand 32 in einem Viertelkreisbogen auslaufen und mit der Gelenkabdeckung 34 radial abschließen. Dadurch ergibt sich ein schmaler erster Hebel 10, dessen Breite sich im wesentlichen aus dem Lagerauge 15 und der Gelenkabdeckung 34 bestimmt. Durch diese Maßnahmen ist die Gelenkverbindung bei gleicher Lagerfläche flacher und schmaler.

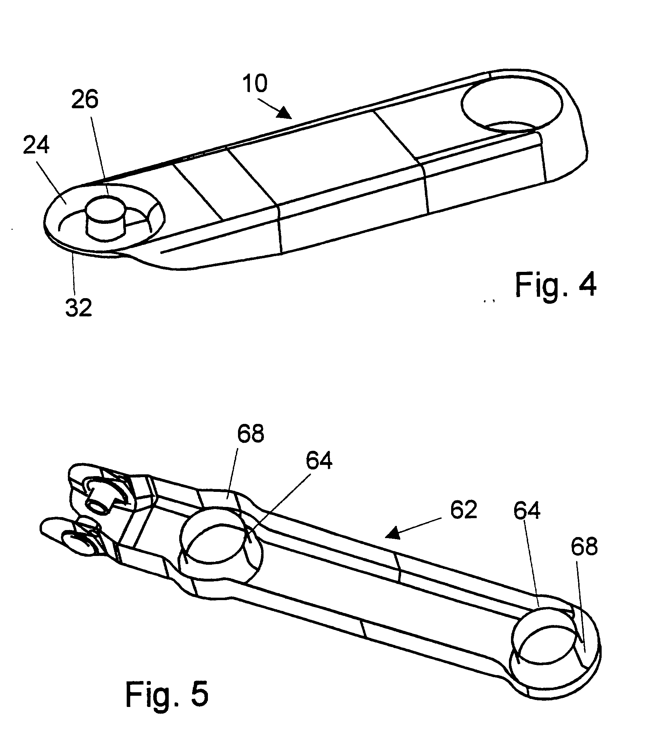

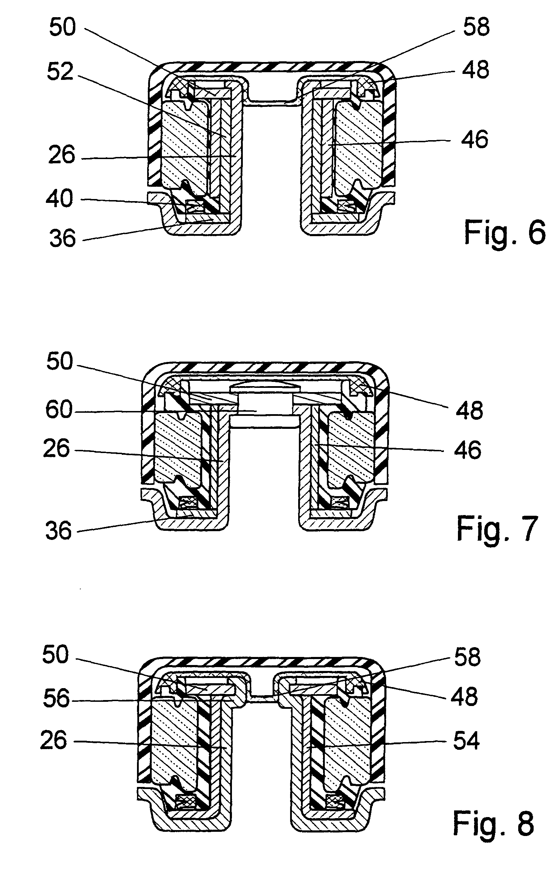

Bei den Ausführungen nach Fig. 3, 6 und 7 ist eine Lagerbuchse 46 aus hochwertigem Lagerwerkstoff vorgesehen, z.B. eine sogenannte DU-Buchse oder Kunststoffbuchse, die in dem Lagerteil 16 befestigt ist. Sie kann aber auch auf dem Lagerbolzen 26 aufgepreßt sein (Fig. 7). Durch die höhere Belastbarkeit der Lagerbuchse 46 kann die Lagerfläche reduziert werden, insbesondere in ihrer Länge, so daß sich eine flacher bauende Gelenkverbindung ergibt. Die Dichtung zwischen dem Lagerteil 16 und der Lagerscheibe 36 wird nach Fig. 3 von einem Profilring 44 mit im wesentlichen quadratischen Querschnitt und nach Fig. 5 von einer Lippendichtung gebildet.

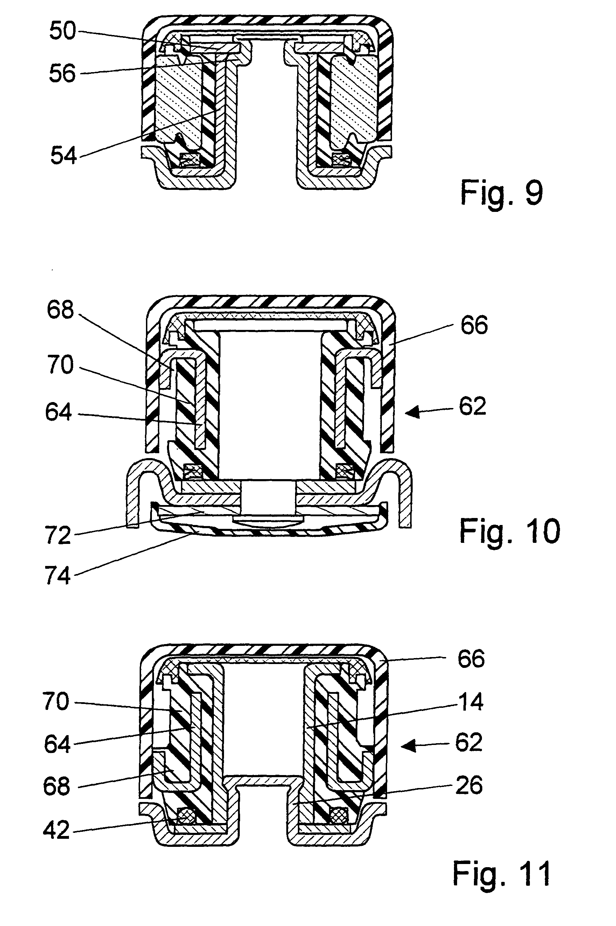

Bei den Ausführungen nach Fig. 6 bis 9 wird die Anlauffläche 18 von einer weiteren Lagerscheibe 50 gebildet. Diese ist zwischen einer Distanzhülse 52 und einem äußeren Nietrand des Hohlkörpers 26 gehalten (Fig. 3) oder mit einer separaten Niete 60 mit dem Boden des Hohlkörpers 26 verbunden, wobei der Hohlkörper 26 als Distanzstück zwischen den Lagerscheiben 36 und 50 dient (Fig. 6). Dadurch kann die Distanzhülse 52 entfallen. Schließlich kann die Lagerscheibe 50 an einem Bund 56 des Hohlkörpers 26 anliegen und von seinem Nietrand gehalten werden (Fig. 8 und 9). In den Ausführungen nach Fig. 7 bis 9 kann sowohl auf die Distanzhülse 52 als auch auf die Lagerbuchse 46 verzichtet werden, indem ein Lagerwerkstoff 54 unmittelbar auf den Hohlkörper 26 aufgebracht, insbesondere aufgespritzt ist. Der Lagerwerkstoff 54 reicht zweckmäßigerweise bis in den Bereich der Mulde 24, so daß die Lagerscheibe 36 entfallen kann.

Wie bereits erwähnt, ist die innere Stirnseite des Hohlkörpers 26 zweckmäßigerweise geschlossen. Allerdings kann sie auch offen gestaltet werden (Fig. 6 und 8), wenn ein hutförmiger Teil 58 der Dichtkappe 48 die Öffnung abdichtet.

Die Ausführungen nach Fig. 10 und 11 haben einen zweiten Hebel 62 in Form eines Blechbiegeteils, das einen U-förmigen Querschnitt aufweist und dessen Lageraugen von Ausstülpungen 64 gebildet werden. Diese sind beidseitig mit Lagerwerkstoff 70 umspritzt. Dadurch wird gewährleistet, daß die Lagerbereiche ihre Form innerhalb zulässiger Toleranzen beibehalten und sich nicht während des Spritzvorgangs verformen. Aus verfahrenstechnischen Gründen ist der Zwischenraum 68 zwischen der Ausstülpung 64 und dem U-förmigen Profil mehr oder weniger mit Lagerwerkstoff 70 ausgefüllt.

Der zweite Hebel 62 ist nach außen mit einer Kunststoffabdekkung 66 verkleidet. Weist die offene Seite des U-förmigen Profils zur Kunststoffabdeckung 66, ergibt sich ein geschlossener, allseitig geschützter Hebel 62. Der zweite Hebel 62 kann unbeschränkt an die Stelle des zweiten Hebels 12 treten, so daß sich nach Wunsch ein oder mehrere Vorteile realisieren lassen.

## Patentansprüche

1. Gelenkverbindung mit einem ersten, als Blechbiegeteil gestalteten Hebel (10), der an einem Ende eine Mulde (24) mit einem Lagerbolzen (14) hat, und mit einem zweiten Hebel (12), der ein den Lagerbolzen (14) umfassendes Lagerauge (15) mit einem Lagerteil (16) aufweist, das zwischen zwei an seinen Stirnseiten angeordneten Anlaufflächen (18, 20) gehalten ist, **dadurch gekennzeichnet, daß** der Lagerbolzen (14) einen Hohlraum (22) hat, der mindestens zu einer Stirnseite hin offen ist.

2. Gelenkverbindung nach Anspruch 1 , **dadurch gekennzeichnet, daß** die Mulde (24) zentral einen tiefgezogenen Hohlkörper (26) aufweist, der in den Hohlraum (22) des Lagerbolzens (14) hineinragt und an seiner Stirnseite (28) mit dem Lagerbolzen (14) vernietet ist.

3. Gelenkverbindung nach einem der vorhergehenden Ansprüche, **dadurch gekennzeichnet, daß** der Hohlraum (22) zur Mulde (24) hin eine Verengung aufweist, die als Anlagefläche (30) für den Hohlkörper (26) dient.

4. Gelenkverbindung nach einem der vorhergehenden Ansprüche, **dadurch gekennzeichnet, daß** der Rand (32) der Mulde (24) nach außen etwa in einem Viertelkreisbogen quer zu einer Schwenkachse ausläuft und radial mit einer Gelenkabdeckung (34) abschließt.

5. Gelenkverbindung nach einem der vorhergehenden Ansprüche, **dadurch gekennzeichnet, daß** in der Mulde (24) eine Lagerscheibe (36) angeordnet ist, an der das Lagerteil (16) anliegt, während die gegenüberliegende Anlauffläche von einem Kragen (38) des Lagerbolzens (14) gebildet wird.

6. Gelenkverbindung nach einem der vorhergehenden Ansprüche, **dadurch gekennzeichnet, daß** zwischen dem Lagerteil (16) und der Lagerscheibe (36) eine Axialdichtung in Form einer Lippendichtung (40) oder eines Profilrings (42, 44) vorgesehen ist.

7. Gelenkverbindung nach einem der vorhergehenden Ansprüche, **dadurch gekennzeichnet, daß** mit dem Lagerteil (16) oder dem Lagerbolzen (14) eine Lagerbuchse (46) aus kunststoffbeschichtetem Stahl verbunden ist.

8. Gelenkverbindung nach einem der vorhergehenden Ansprüche, **dadurch gekennzeichnet, daß** das Lagerteil (14) an seiner der Mulde (24) abgewandten Stirnseite eine Dichtkappe (48) besitzt.

9. Gelenkverbindung nach einem der vorhergehenden Ansprüche, **dadurch gekennzeichnet, daß** der Hohlkörper (26) den Lagerzapfen bildet, indem er durch das Lagerteil (16) hindurchgeführt ist und an seinem äußeren Ende mit einer zweiten Lagerscheibe (50) für das Lagerteil (16) vernietet ist.

10. Gelenkverbindung nach Anspruch 9 , **dadurch gekennzeichnet, daß** als Stützlager für die Lagerscheibe (50) eine Distanzhülse (52) zwischen den beiden Lagerscheiben (36, 50) dient.

11. Gelenkverbindung nach Anspruch 9 , **dadurch gekennzeichnet, daß** der Hohlkörper (26) an seinem äußeren Umfang und die Mulde (24) innen mit einem Lagerwerkstoff (54) beschichtet sind und der Hohlkörper (26) an seinem äußeren Ende einen Bund (56) bildet, auf dem sich die zweite Lagerscheibe (50) abstützt.

12. Gelenkverbindung nach einem der vorhergehenden Ansprüche, **dadurch gekennzeichnet, daß** der Hohlkörper (26) an seinem äußeren Ende geschlossen ist.

13. Gelenkverbindung nach Anspruch 1 , **dadurch gekennzeichnet, daß** der Hohlkörper (26) an seinem äußeren Ende eine Öffnung aufweist, die durch einen zentralen, hutförmigen Teil (58) der Dichtkappe (48) abgedichtet ist.

14. Gelenkverbindung nach Anspruch 1 , **dadurch gekennzeichnet, daß** die zweite Lagerscheibe (50) über den Hohlkörper (26) geführt ist und mit diesem an seiner Stirnseite durch eine Niete (60) verbunden ist.

15. Gelenkverbindung nach einem der vorhergehenden Ansprüche oder dem Oberbegriff von Anspruch 1 , **dadurch gekennzeichnet, daß** der zweite Hebel (62) als Blechbiegeteil mit einem im wesentlichen U-förmigen Profil ausgebildet ist, das im Bereich der Lagerteile (16) tief gezogene Ausstülpungen (64) aufweist, auf die die Lagerteile (16) aufgespritzt sind.

16. Gelenkverbindung nach Anspruch 15, **dadurch gekennzeichnet, daß** das Lagerteil (16) innen und außen der Ausstülpung (64) angeordnet ist.

17. Gelenkverbindung nach Anspruch 15 oder 16, **dadurch gekennzeichnet, daß** das U-förmige Profil von einer Kunststoffabdeckung (66) verkleidet ist.

18. Gelenkverbindung nach Anspruch 17, **dadurch gekennzeichnet, daß** die offene Seite des U-förmigen Profils der Abdekkung (66) zugewandt ist.

19. Gelenkverbindung nach Anspruch 18, **dadurch gekennzeichnet, daß** der Zwischenraum (68) zwischen dem U-förmigen Profil und der Ausstülpung (64) teilweise oder ganz mit Lagerwerkstoff (70) aufgefüllt ist.

## Claims

1. Hinge joint having a first lever (10) which is designed as a sheet-metal bent part and, at one end, has a hollow (24) with a bearing bolt (14), and having a second lever (12) which has a bearing eye (15) which surrounds the bearing bolt (14) and has a bearing part (16) which is held between two run-on surfaces (18, 20) arranged on its end sides, **characterized in that** the bearing bolt (14) has a cavity (22) which is open at least towards one end side.

2. Hinge joint according to Claim 1, **characterized in that** the hollow (24) has, in the centre, a deep-drawn hollow body (26) which protrudes into the cavity (22) of the bearing bolt (14) and is riveted on its end side (28) to the bearing bolt (14).

3. Hinge joint according to one of the preceding claims, **characterized in that** the cavity (22) has, towards the hollow (24), a constriction which serves as a bearing surface (30) for the hollow body (26).

4. Hinge joint according to one of the preceding claims, **characterized in that** the edge (32) of the hollow (24) peters out outwards approximately in a quarter circle transversely with respect to a pivot axis and ends radially at a hinge cover (34).

5. Hinge joint according to one of the preceding claims, **characterized in that** a bearing washer (36), against which the bearing part (16) bears, is arranged in the hollow (24) while the opposite run-on surface is formed by a collar (38) of the bearing bolt (14).

6. Hinge joint according to one of the preceding claims, **characterized in that** an axial seal in the form of a lip seal (40) or a shaped ring (42, 44) is provided between the bearing part (16) and the bearing washer (36).

7. Hinge joint according to one of the preceding claims, **characterized in that** a bearing bushing (46) made of plastic-coated steel is connected to the bearing part (16) or to the bearing bolt (14).

8. Hinge joint according to one of the preceding claims, **characterized in that** the bearing part (14) has a sealing cap (48) on its end side which faces away from the hollow (24).

9. Hinge joint according to one of the preceding claims, **characterized in that** the hollow body (26) forms the bearing journal by being guided through the bearing part (16) and being riveted at its outer end to a second bearing washer (50) for the bearing part (16).

10. Hinge joint according to Claim 9, **characterized in that** a spacer sleeve (52) between the two bearing washers (36, 50) serves as a supporting bearing for the bearing washer (50).

11. Hinge joint according to Claim 9, **characterized in that** the hollow body (26) is coated on its outer circumference and the hollow (24) on the inside with a bearing material (54), and the hollow body (26), at its outer end, forms a shoulder (56) on which the second bearing washer (50) is supported.

12. Hinge joint according to one of the preceding claims, **characterized in that** the hollow body (26) is closed at its outer end.

13. Hinge joint according to Claim 1, **characterized in that** the hollow body (26), at its outer end, has an opening which is sealed by a central, hat-shaped part (58) of the sealing cap (48).

14. Hinge joint according to Claim 1, **characterized in that** the second bearing washer (50) is guided over the hollow body (26) and is connected to the latter on its end side by means of a rivet (60).

15. Hinge joint according to one of the preceding claims or according to the precharacterizing clause of Claim 1, **characterized in that** the second lever (62) is designed as a sheet-metal bent part having an essentially U-shaped profile which, in the region of the bearing parts (16), has deep-drawn protuberances (64) onto which the bearing parts (16) are injection-moulded.

16. Hinge joint according to Claim 15, **characterized in that** the bearing part (16) is arranged on the inside and outside of the protuberance (64).

17. Hinge joint according to Claim 15 or 16, **characterized in that** the U-shaped profile is covered by a plastic cover (66).

18. Hinge joint according to Claim 17, **characterized in that** the open side of the U-shaped profile faces the cover (66).

19. Hinge joint according to Claim 18, **characterized in that** the intermediate space (68) between the U-shaped profile and the protuberance (64) is partially or completely filled with bearing material (70).

## Revendications

1. Articulation comprenant un premier levier (10) structuré comme une pièce pliée en tôle ayant à une extrémité une cuvette (24) avec un pivot (14), et un deuxième levier (12) qui présente un oeillet de palier (15) entourant le pivot (14) avec une pièce de palier (16) maintenue entre deux portées (18, 20) placées sur ses côtés frontaux,
**caractérisée en ce que**
le pivot (14) a un espace creux (22) qui est ouvert au moins vers un côté frontal.

2. Articulation selon la revendication 1,
**caractérisée en ce que**
la cuvette (24) présente au centre un corps creux (26) embouti qui dépasse dans l'espace creux (22) du pivot (14) et qui est riveté au pivot (14) sur son côté frontal (28).

3. Articulation selon l'une des revendications précédentes,
**caractérisée en ce que**
l'espace creux (22) présente vers la cuvette (24) un rétrécissement qui sert de surface d'appui (30) pour le corps creux (26).

4. Articulation selon l'une des revendications précédentes,
**caractérisée en ce que**
le bord (32) de la cuvette (24) s'étend vers l'extérieur approximativement selon un quart de circonférence transversalement à son axe de pivotement et se termine radialement avec un couvercle d'articulation (34).

5. Articulation selon l'une des revendications précédentes,
**caractérisée en ce que**
dans la cuvette (24) est placée une rondelle (36) sur laquelle s'appuie la pièce de palier (16) tandis que la portée opposée est formée par un collet (38) du pivot (14).

6. Articulation selon l'une des revendications précédentes,
**caractérisée en ce que**
l'on prévoit entre la pièce de palier (16) et la rondelle (36) un joint axial sous forme d'un joint à lèvres (40) ou d'un anneau profilé (42, 44).

7. Articulation selon l'une des revendications précédentes,
**caractérisée en ce qu'**
un coussinet (46) en acier revêtu de matière synthétique est relié à la pièce de palier (16) ou au pivot (14).

8. Articulation selon l'une des revendications précédentes,
**caractérisée en ce que**
la pièce de palier (1[6]) possède un capot étanche (48) sur son côté frontal opposé à la cuvette (24).

9. Articulation selon l'une des revendications précédentes,
**caractérisée en ce que**
le corps creux (26) forme le pivot du fait qu'il est passé à travers la pièce de palier (16) et que son extrémité extérieure est rivetée à une deuxième rondelle (50) pour la pièce de palier (16).

10. Articulation selon la revendication 9,
**caractérisée en ce qu'**
un manchon d'écartement (52) entre les deux rondelles (36, 50) sert de palier d'appui pour la rondelle (50).

11. Articulation selon la revendication 9,
**caractérisée en ce que**
le corps creux (26) sur son pourtour extérieur et la cuvette (24) à l'intérieur sont recouverts d'un matériau de palier (54), et le corps creux (26) forme à son extrémité extérieure un épaulement (56) sur lequel s'appuie la deuxième rondelle (50).

12. Articulation selon l'une des revendications précédentes,
**caractérisée en ce que**
le corps creux (26) est fermé à son extrémité extérieure.

13. Articulation selon la revendication 1,
**caractérisée en ce que**
le corps creux (26) présente à son extrémité extérieure une ouverture rendue étanche par une pièce (58) centrale en chapeau du capot étanche (48).

14. Articulation selon la revendication 1,
**caractérisée en ce que**
la deuxième rondelle (50) est guidée sur le corps creux (26) et est liée à sa face frontale par un rivet (60).

15. Articulation selon l'une des revendications précédentes ou selon la partie introductive de la revendication 1,
**caractérisée en ce que**
le deuxième levier (62) a la forme d'une pièce pliée en tôle avec un profilé pratiquement en U qui présente dans la zone de la pièce de palier (16) des excroissances (64) embouties sur lesquelles sont moulées les pièces de palier (16).

16. Articulation selon la revendication 15,
**caractérisée en ce que**
la pièce de palier (16) est placée à l'intérieur ou à l'extérieur des excroissances (64).

17. Articulation selon la revendication 15 ou 16,
**caractérisée en ce que**
le profilé en U est revêtu d'un recouvrement en matière synthétique (66).

18. Articulation selon la revendication 17,
**caractérisée en ce que**
le côté ouvert du profilé en U est orienté vers le recouvrement (66).

19. Articulation selon la revendication 18,
**caractérisée en ce que**
l'espace intermédiaire (68) entre le profilé en U et l'excroissance (64) est partiellement ou entièrement rempli de matériau pour paliers (70).
